# EUROPEAN PATENT SPECIFICATION

(11) **EP 1 481 307 B1**
(45) Date of publication and mention of the grant of the patent: **18.06.2008**
(21) Application number: 03743445.3
(22) Date of filing: 05.03.2003
(51) Int. Cl.: G06F 1/00

(54) **SOFTWARE PROTECTION ARRANGEMENT**
PROGRAMMSCHUTZ-VORRICHTUNG
SYSTEME DE PROTECTION DE LOGICIEL

(30) Priority: 05.03.2002 GB 0205045
(43) Date of publication of application: 01.12.2004
(73) Proprietor: Simplex Major SDN.BHD, Selangor Darul Ehsan (MY)
(72) Inventor: Safa, John Aram, Nottingham NG7 1DU (GB)
(74) Representative: Hoarton, Lloyd Douglas Charles
(86) International application number: PCT/GB2003/000955
(87) International publication number: WO 2003/075133

(56) References cited:
- WO-A-00/57613
- US-A- 5 768 372
- US-A- 6 023 506
- US-A- 6 141 698
- SCHNEIER B: "Applied Cryptography, COMBINING BLOCK CIPHERS" , APPLIED CRYPTOGRAPHY. PROTOCOLS, ALGORITHMS, AND SOURCE CODE IN C, NEW YORK, JOHN WILEY & SONS, US, PAGE(S) 357-368 XP002244523 ISBN: 0-471-11709-9 page 367 -page 368

## Description

The present invention relates to software protection arrangements and in particular, to an arrangement operable to protect software sent across a communication network.

It is becoming increasingly common for software to be downloaded across communication networks, particularly mobile communication networks or a fixed network such as the internet. Software may be purchased in this manner or may be supplied in order to allow the user to gain access to another service available over the network. In either event, it is desirable to protect the software which is downloaded. In the case of software which is purchased, this would prevent the software being copied for supply by the purchaser to unauthorised users, thereby depriving the software supplier of legitimate revenue for the software product. In the case of software required for accessing another service over the network, it is desirable to prevent unauthorised copies being able to make access to that service, if that would deprive the service provider of legitimate revenue.

US-A-6141698 discloses a method and system for modifying the behaviour of existing executable code by injecting new code into an executable file.

The invention provides a software protection arrangement operable to protect software sent across a communication network from a software supplier to a client machine, the client machine being operable to request software from the software supplier, and the software supplier being operable to respond to a request to send the requested software in encrypted form and with associated identification of the required decryption, successful decryption requiring at least one decryption key, the software supplier being provided with a plurality of encryption routines and being operable to encrypt by selecting at least two of the encryption routines and executing each selected routine in turn, the first selected routine being applied to the software to be protected, to provide an encrypted form and the or each further selected routines being applied to an encrypted form provided by a previous execution of another routine.

Each encryption routine has a decryption routine associated therewith, the decryption routine being incorporated into the encrypted form provided by the corresponding encryption routine and prior to further encryption by another encryption routine. The decryption routine may be written into one or more areas of the encrypted form at which the encrypted form contains no meaningful content. The beginning of the decryption routine corresponding with the final encryption routine applied to the software is preferably written to a position chosen to cause the said decryption routine to run when the encrypted software is called for execution within the client machine. Each decryption routine preferably concludes by calling the decryption routine corresponding with the previous encryption routine, whereby decryption routines are executed in the reverse order of the corresponding encryption routines.

Each decryption routine preferably requires a decryption key available at the time of decryption. The or a decryption key may be available locally at the client machine. The decryption key may be stored within the machine or may be derived from information relating to the hardware or software present at the client machine.

Alternatively, the or a decryption key may be available from a remote location in response to a request made from the client machine over the communications network.

The or a decryption key may be identification data input by a user at the client machine.

The required decryption key may be different for each decryption routine.

The protected software may be an application operable, when decrypted and executed, to decode content available over a communications network.

The software supplier is preferably operable in response to each request to make a new selection of routines and to encrypt by means of that new selection in order to provide an encrypted form of the software for fulfilment of the request.

Alternatively, the software supplier may be operable to create an encrypted form of the software, and to provide that encrypted form in response to any request. The software supplier may be operable to create periodically a fresh encrypted form of the software for use in fulfilling future requests.

The software supplier may comprise a server machine containing software in unencrypted form, and encryption means operable as aforesaid. Alternatively, the encryption means may be remote from the server machine and communicate therewith by means of a communication network.

The encryption means may provide the encrypted software to the server machine for onward transmission to the client machine. Alternatively, the encryption means may transmit the encrypted software to the client machine without passing through the server machine.

The encryption means may be common to a plurality of server machines, and be operable to encrypt content provided from many of those server machines. selected routine being applied to the software to be protected, to provide an encrypted form, and the or each further selected routine being applied to an encrypted form provided by a previous execution of another routine.

Each encryption routine preferably has a decryption routine associated therewith, the software supplier being operable to incorporate the decryption routine into the encrypted form provided by the corresponding encryption routine and prior to further encryption by another encryption routine. The decryption routine may be written into one or more areas of the encrypted form at which the encrypted form contains no meaningful content. The beginning of the decryption routine corresponding with the final encryption routine applied to the software is preferably written to a position chosen to cause the said decryption routine to run when the encrypted software is called for execution within the client machine. Each decryption routine preferably concludes by calling the decryption routine corresponding with the previous encryption routine, whereby decryption routines are executed in the reverse order of the corresponding encryption routines.

Each decryption routine preferably requires a decryption key available at the time of decryption.

The required decryption key may be different for each decryption routine.

The protected software may be an application operable, when decrypted and executed, to decode content available over a communications network.

The software supplier is preferably operable in response to each request to make a new selection of routines and to encrypt by means of that new selection in order to provide an encrypted form of the software for fulfilment of the request.

Alternatively, the software supplier may be operable to create an

The invention also provides computer software which, when installed on a computer system is operable as a software protection arrangement according to any of the preceding definitions.

The invention also provides a data storage medium containing computer software as defined in the preceding paragraph.

The invention also provides a method of encrypting software in which at least two encryption routines are selected from a plurality of available encryption routines, and each selected routine is executed in turn, the first selected routine being applied to the software to be protected, to provide an encrypted form, and the or each further selected routine being applied to an encrypted form provided by a previous execution of another routine.

Each encryption routine has a decryption routine associated therewith, the decryption routine being incorporated into the encrypted form provided by the corresponding encryption routine and prior to further encryption by another encryption routine. The decryption routine may be written into one or more areas of the encrypted form at which the encrypted form contains no meaningful content. The beginning of the decryption routine corresponding with the final encryption routine applied to the software is preferably written to a position chosen to cause the said decryption routine to run when the encrypted software is called for execution. Each decryption routine preferably concludes by calling the decryption routine corresponding with the previous encryption routine, whereby decryption routines are executable in the reverse order of the corresponding encryption routines.

Each decryption routine preferably requires a decryption key available at the time of decryption. The required decryption key may be different for each decryption routine. The protected software may be an application operable, when decrypted and executed, to decode content available over a communications network.

Preferably a new selection of routines is made on each occasion that software is to be encrypted.

In a further aspect, the invention provides a method of providing digital content over a communication network to a customer, in which the digital content is provided in a form which requires receiver software to be executed by the customer to allow the digital content to be used by the customer, and in which the receiver software is provided to the user in return for a payment, the receiver software being encrypted in accordance with the method set about above, prior to being provided to the customer, whereby the digital content cannot be used by the customer unless the receiver software has been successfully decrypted.

In a further aspect, the invention provides software encryption apparatus, comprising storage means containing a plurality of encryption routines, selection means operable to select at least two of the encryption routines, and execution means operable to execute each selected routine in turn, the first selected routine being applied to the software to be protected, to provide an encrypted form, and the or each further selected routine being applied to an encrypted form provided by a previous execution of another routine.

Each encryption routine has a decryption routine associated therewith, the execution means being operable to incorporate the decryption routine into the encrypted form provided by the corresponding encryption routine and prior to further encryption by another encryption routine. The decryption routine may be written into one or more areas of the encrypted form at which the encrypted form contains no meaningful content. The beginning of the decryption routine corresponding with the final encryption routine applied to the software is preferably written to a position chosen to cause the said decryption routine to run when the encrypted software is called for execution. Each decryption routine preferably concludes by calling the decryption routine corresponding with the previous encryption routine, whereby decryption routines are executed in the reverse order of the corresponding encryption routines.

Each decryption routine preferably requires a decryption key available at the time of decryption. The required decryption key may be different for each decryption routine.

The selection means is preferably operable on each occasion to make a new selection of routines and to encrypt by means of that new selection.

The invention also provides software which, when installed on a computer system, is operable to cause the computer system to function as a software encryption apparatus of the type defined above.

The invention also provides a carrier medium carrying software as defined in the preceding paragraph. The carrier medium may be a data storage device. The carrier medium may be a transmission medium, the software being carried by a signal propagating on the medium.

Examples of the present invention will now be described in more detail, by way of example only, and with reference to the accompanying drawings, in which:
Fig. 1 is a highly schematic block diagram illustrating an arrangement for implementing the present invention;
Fig. 2 is a simplified schematic diagram of a user device for use in the arrangement of Fig. 1;
Fig. 3 corresponds with Fig. 2 and shows an alternative arrangement;
Fig. 4 corresponds with Fig. 2, showing a user device for the arrangement of Fig. 3;
Fig. 5 is a simplified schematic diagram of a server device for use in the arrangement of Fig. 3;
Figs. 6 and 7 correspond with Figs. 3 and 5, and relate to a further alternative arrangement;
Fig. 8 schematically illustrates the manner in which software is encrypted prior to transmission when implementing any of the arrangements;
Fig. 9 is a simplified flow diagram of the encryption process; and
Figs. 10 and 11 correspond with Figs. 8 and 9, illustrating decryption.

### Implementation with Mobile Network

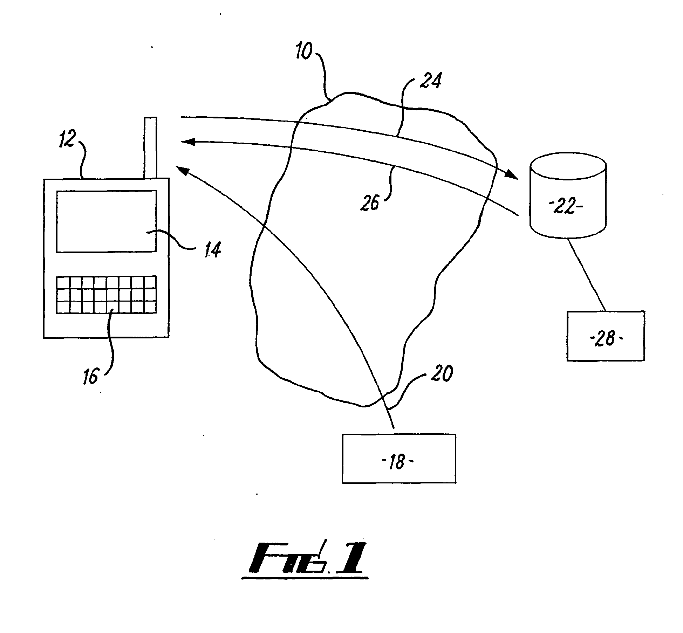

Turning to Fig. 1, there is shown an arrangement by means of which the present invention can be used in conjunction with a mobile communication network, indicated at 10. The details of the mobile network 10 do not themselves form part of the present invention. It is therefore sufficient to indicate that the network 10 may be a wireless network, such as a mobile telephone network. The network 10 is preferably of the type capable of being "always on", i.e. maintaining permanent connection with a client machine 12, which may be a personal, portable communication device, such as a mobile telephone, wireless terminal or the like. In Fig. 1, the user device 12 is simply illustrated as having a screen 14 and keyboard 16.

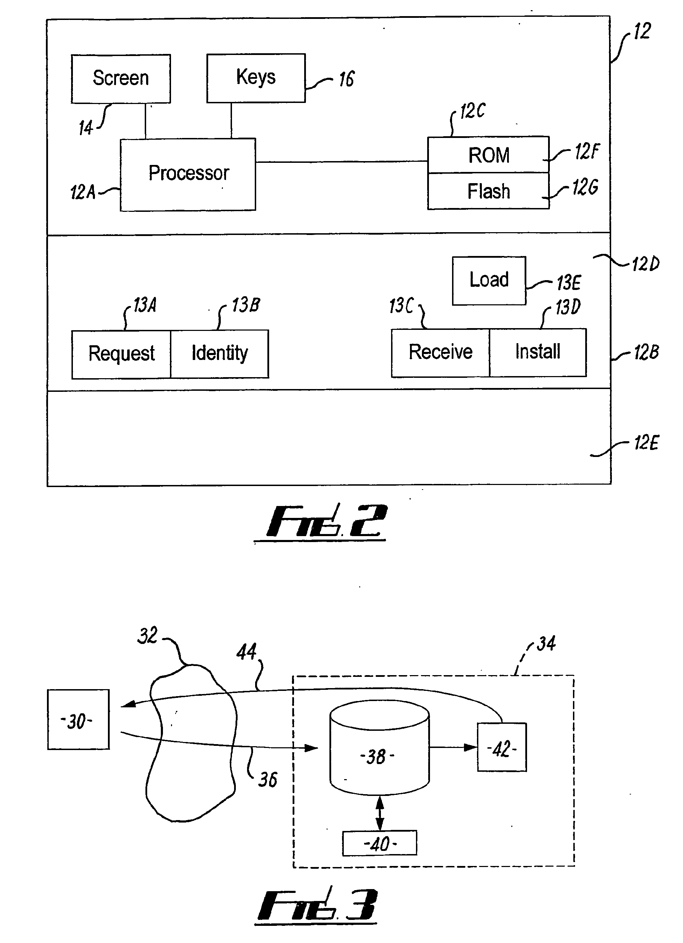

The device 12 is shown in more detail in Fig. 2, and includes a processor 12A with access to main memory 12B and auxiliary memory 12C. The main memory includes an area 12D containing the operating system for the device 12, and an area 12E into which application software may be loaded when required. The auxiliary memory 12C includes an area 12F from which the operating system may be loaded to 12D, and is preferably read-only memory (ROM). A further area 12G is available for receiving downloaded additional software applications for running under the operating system.

The user device 12 operates under control of the operating system, shown installed at 12D. For the present example, the device 12 will be described in use by a user who seeks to view (on the screen 14) content provided on a commercial basis from a content provider indicated at 18. This content may be, for example, a recording of a film or other entertainment, coverage of a sports event or the like. Many situations exist in which the user is required to pay for access to content of this nature. The arrangement which will now be described seeks to restrict access to legitimate viewers who have made the appropriate payment.

In this example, it is envisaged that extra viewer or receiver software, in addition to the operating system, is required on the user device 12 in order to view the content received at 20, from the content provider 18. For example, the content may be a video, in which case the extra software will be a video viewer application. In this example, the video viewer software can be requested by the user device 12 by communicating with the network operator (or service provider), indicated at 22, by means of a message 24 sent over the network 10. The message 24 is generated within the device 12 by software modules of the operating system, as illustrated at 12D. It is to be understood that the operating system will also include many other software modules for effecting many other functions.

The operating system includes a request module 13A, which recognises user commands entered by means of the keys 16, or by other user controls, and indicating a request for access to a service which requires software additional to the operating system. The request from the user is analysed by the module 13A to create the request message 24. The message 24 includes identification information provided by a software module 13B to identify the device 12, the user or other information. This may be stored permanently within the device 12, such as in the memory area 12F.

The message 24 is sent to the network operator 22. In order to authorise downloading of the video player at 26, the network operator 22 will make appropriate checks, or implement appropriate financial transactions (such as a debit to a credit card account). These are described more fully below, with reference to Figs. 3, 5 and 6. These procedures may include checking and updating a database 28 of licence details (Fig. 1). For example, the database 28 may record that a particular user has paid to view a particular movie on one occasion, or on an unlimited number of occasions over a fixed period.

Once these procedures have been completed to the satisfaction of the network operator 22, the video loader is downloaded at 26 to the user device 12, being received by a software module 13C and installed in the memory 12C by a software module 13D. The downloaded software can then be loaded, when required, to the application area 12E by a loader software module 13E.

However, the video viewer is protected in accordance with the invention, and as will be described in more detail below, so that the video viewer can only be operated on the intended user device, by the intended operator. In particular, a copy of the video viewer, if taken onto an alternative user device 12, would not be successful in accessing the content 20. Furthermore, the manner in which the video viewer is protected during the download 26 greatly reduces the prospect of the protection being circumvented. It is envisaged that in accordance with the invention, the likelihood of the protection provided by the invention being circumvented can be made negligibly small.

Consequently, a user of the device 12 cannot view the content 20 without the video viewer software running on the device 12 but in turn, the protection of the invention prevents the video viewer running on the device 12 unless properly authorised by the network operator 22 and/or content provider 18. The content provider 18 and network operator 22 are illustrated as separate entities in Fig. 1, to reflect the expected most likely commercial arrangement but it is to be realised that the existence of this separation is not essential to the invention.

### Implementation for Downloads to Computers

Figs. 3 to 7 show various arrangements for implementing the invention. These are intended primarily for use in connection with software downloads to computers, particularly software being purchased over the internet for running on a local client machine. This software may be an application run by the user, or may be required for access, over the internet or other network, for accessing another service. This other service may be content provision such as entertainment or sport coverage.

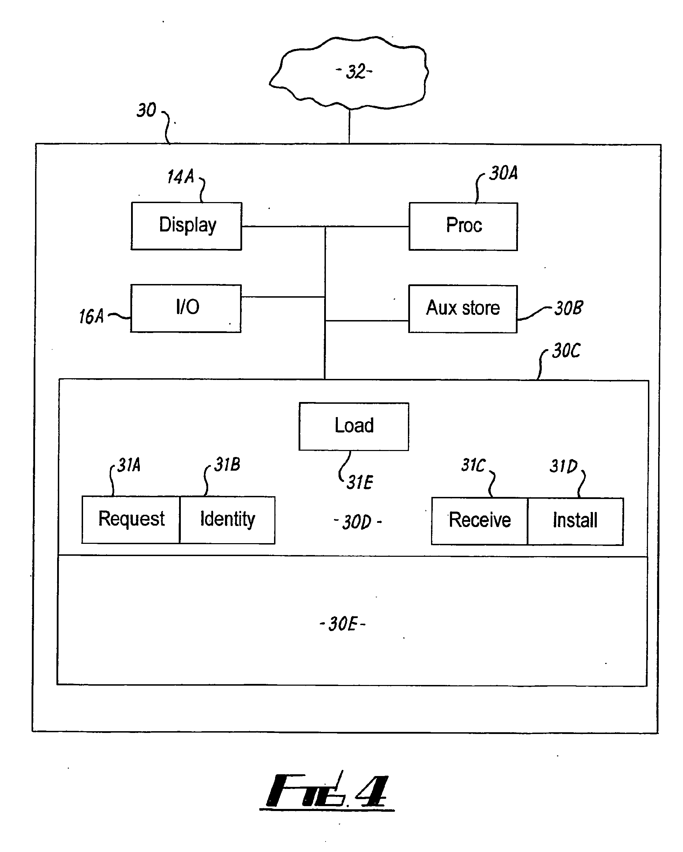

In Figs. 3 and 4, a client machine 30, normally owned by the user, is illustrated communicating by means of the internet 32 with a software supplier 34. The machine 30 is based around a processor 30A which has access to a screen or display 14A, input and output apparatus 16A, auxiliary storage 30B and main memory 30C. The main memory 30C includes a memory area 30D containing an operating system, several software modules of which are illustrated in Fig. 4. A further memory area 30E allows for the installation of application software and is illustrated as empty in Fig. 4.

The software modules of the operating system 30D are loaded in the same manner as corresponding modules within the operating system 12D of Fig. 2 and have corresponding functions. Consequently, they are indicated with a common numeral 31 and a corresponding suffix letter A to E. The machine responds to a user request input at 16A to send a request 36 from the client machine 30 to the software supplier 34. The request 36 is generated by the request module 31A in conjunction with the identity module 31B in order to identify the machine, user or other information. The request 36 specifies the software which the user seeks to download to the client machine 30. This software is stored by the software supplier 34 in a library 38, in unencrypted form.

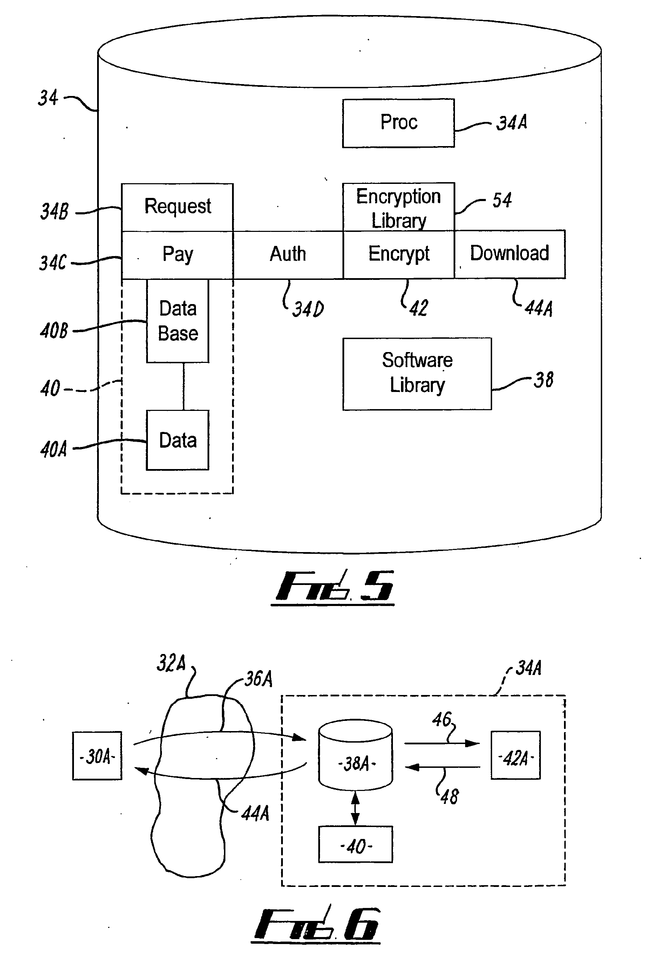

The software supplier 34 includes a processor 34A and various software modules illustrated in Fig. 5. Other hardware and software may be provided, as required. A request message 36, from a client machine 30 is detected and received by a software module 34B. The software supplier 34 then responds to the request 36 by undertaking appropriate procedures to obtain payment for the software, or to check that payment has already been received. These are effected by a software module 34C. These procedures may include consulting a licence database 40, and updating if required. Access to the data 40A in the database 40 is available by operation of a software module 40B.

Once all payment procedures and other checks have been completed, an authorisation software module 34D authorises the request 36 to be fulfilled.

Once fulfilment of the request has been authorised, the requested software is extracted from a library 38 of available software and is put though an encryption process implemented by a software module 42 before being downloaded by a software module 44A to the client machine 30, as a message 44 sent by means of the internet 32. The operation of the encryption module 42A will be described in more detail below. However, it is appropriate at this point to explain that the invention envisages the encryption process being unique on each occasion. That is, each operation of the module 42A will result in a different encryption algorithm being applied to the protected software. Thus, in addition to requiring at least one decryption key as is common in many encryption techniques, the use of encryption which is unique on each occasion will significantly reduce the likelihood of the protection being circumvented, and is thus expected to reduce to a negligible level the likelihood of the downloaded software becoming available for use by anyone other than the authorised user. The manner in which this protection is achieved will be described below.

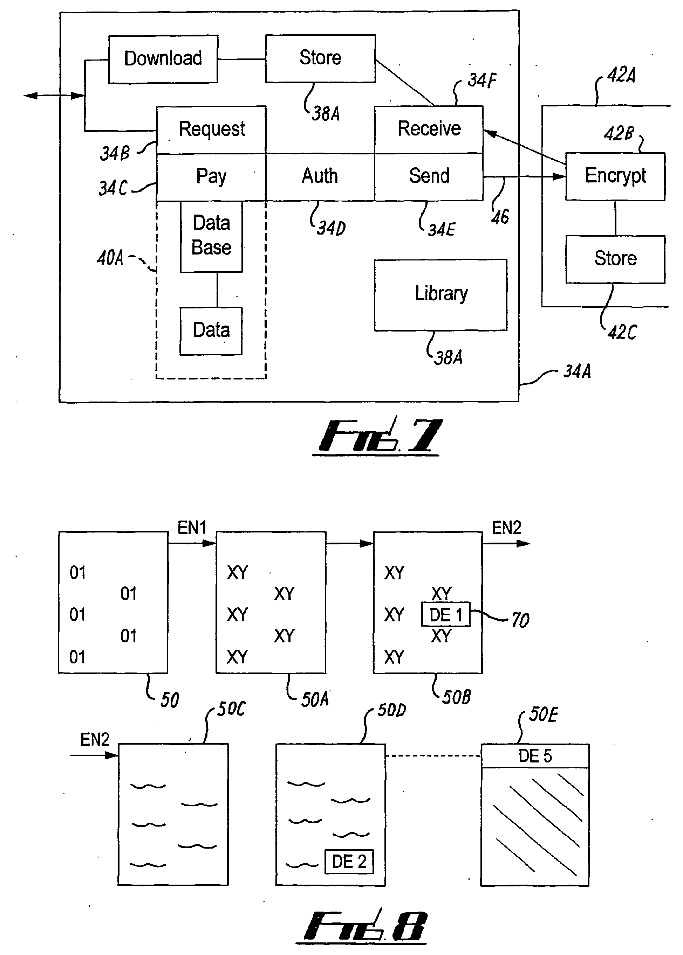

Figs. 6 and 7 show a further alternative arrangement. This arrangement has many similarities with the arrangement of Figs. 3 and 5 and consequently, corresponding numerals are used where features correspond. Numerals are suffixed A in Fig. 6. In the arrangement of Fig. 6, the client machine 30A again communicates with the software supplier 34A by means of the internet 32A. The software supplier 34A includes a library 38A, a licensing database 40A and an encryption process 42A. In this example, a request 36A from the client machine 30A is received by the request software module 34B of the software supplier 34A. The request module 34B operates in the same manner as the module 34B of Fig. 5 and thus bears the same reference numeral. Other software modules in Fig. 7 which have the same function as modules in Fig. 5 are also given the same reference numerals in each drawing.

Appropriate procedures to ensure that the user is or can be authorised, are effected by the payment module 34C, in conjunction with the database 40, and the authorisation module 34D. When the request has been authorised by the module 34D, it is fulfilled by downloading, at 44A, an encrypted copy of the requested software. The software has been previously encrypted by an encryption process 42A, the result being stored at 38A for fulfilment of all future requests, until the software supplier 34A desires to update the protection for the software.

On each occasion that the software supplier 34A updates the protection for the software, an encryption process 42A is repeated by sending (at 46) an unencrypted copy of the software from the library 38 to the encryption process 42A.

The unencrypted copy received at 46 is stored at 42C within the encryption process 42A and is then encrypted by operation of an encryption software module 42B. The result is then returned (at 48) and stored at 38A. Each time this encryption process 42A is run, the resultant encryption of the protected software will change, as has been described above in relation to Fig. 3. However, in the arrangement of Fig. 6, the software is not re-encrypted on each occasion that a request is received from a user, but only periodically. Thus, more than one user may have a copy of the protected software, protected by means of the same encryption process, but regular re-encryption by the software supplier 34A will ensure that not all users have software protected in the same manner and thus, the likelihood of a generic procedure being available to circumvent the protection is expected to be rendered negligible.

A common feature of each of the embodiments described above is that software protected by encryption routines is provided to the user, but the manner in which the software is protected is expected to virtually eliminate unauthorised use of that software. Thus, if the software is an application which has been purchased, illicit copying of the software is prevented. Where the software is necessary for viewing other content which must be paid for, unauthorised users cannot gain access to content, because the viewer software will not function correctly.

It is therefore now appropriate to explain in more detail how the downloaded software is protected in each of the arrangements described above, and how the protected software can be executed after it has been downloaded.

### Encryption Arrangements

Fig. 8 illustrates, highly schematically, the content of memory storing the software to be protected, at various stages of the encryption process implemented by the software modules 42,42B.

Thus, the memory 50 (which may be the memory 42C, for example) initially contains the software in unencrypted form, schematically illustrated in Fig. 4 by the use of the binary digits "0" and "1", representing the unencrypted form of the software. This represents the initial state of the memory 50.

The contents of the memory 50 are then operated on by the encryption process 42,42A as set out in the flow diagram of Fig. 5. The encryption process may be embodied as a computer, microprocessor or other data processing machine. The process 42 requires access at 52 to a library 54 of encryption routines. The encryption routines within the library 54 may vary in complexity and type. It is desirable to include in the library a wide range of different types of encryption routine, and a large number of routines. For example, the library 54 may include in excess of one hundred and fifty execution routines.

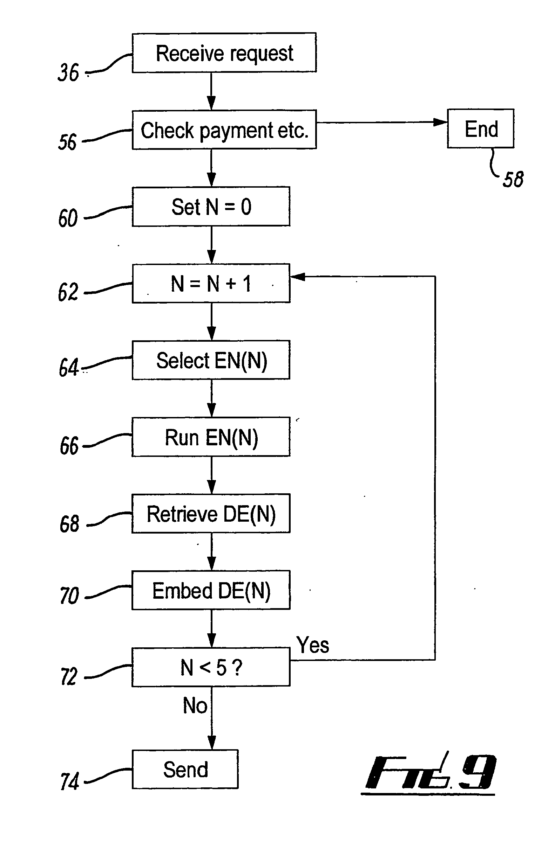

When operation of the process 42 (Fig. 9) is initiated by receipt of a request 36,36A procedures 56 are executed by modules 34B, 40 and 34D in order to check payment details, licence details etc. If those procedures are not successfully executed, the process terminates at 58, without any software being downloaded to the user. If the procedures 56 indicate that the process can continue, the encryption module 42,42B executes a loop of encryption steps, preferably repeatedly, as follows. In this example, the loop is executed five times.

A counter is initiated at 60 and incremented at 62. Step 64 consists of the selection, preferably at random, of one of the routines from the library 54. For convenience in the following description, the selected encryption routine is identified by reference to the current value of the counter N. Thus, the first selected encryption routine will be called EN1. After selection of EN1 at 64, the process 42 runs EN1 at 66. This step applies encryption routine EN1 to the entire contents of the memory 50, i.e. to the entirety of the software to be protected. The result is returned to the memory 50 and is an encrypted form of the software originally in the memory. This first encrypted form is illustrated at 50A in Fig. 4, after running routine EN1, by replacing the unencrypted bits "0" and "1" by the letters "X" and "Y". This change is made to indicate schematically that the software has been encrypted, but initially to a lower level than will ultimately be achieved.

The term encryption is used to refer to any manipulation of digital information which renders the information unusable for its intended purpose, but is reversible.

Following this first encryption step, the process 42 consults the library 54 to recover the decryption routine which corresponds with encryption routine EN1. This decryption routine will be called DE1 in this description. This step is at 68 in Fig. 5.

The retrieved decryption routine DE1 is then written into the memory 50, as indicated at 70 in Fig. 4. Fig. 4 illustrates routine DE1 embedded in the memory 50B as a single block, but can be broken into more than one block, if each block is appropriately modified in order to call the next block during execution, as will be described. The or each block is written into an area of the memory 50 which is within the software being protected (or the encrypted form of it), but contains meaningless data. It is common in many forms of software for areas of memory to be left unused in this manner by virtue of inefficiencies in compilers etc. Moreover, the amount of unused memory will increase in the event that an encryption routine involves some degree of compression.

After embedding decryption routine DE1, a decision is made at 72 as to whether to repeat the sequence, or complete the process at 74. In this example, the sequence is to be repeated five times. Consequently, N is incremented again at 62 and the process repeated. Thus, a second encryption routine EN2 is selected from the library 54, and applied to the memory 50 in its current form, i.e. in the encrypted form which resulted from the execution of routine EN1. It is important to appreciate that at this stage, the memory 50 also includes decryption routine DE1, so that this decryption routine will itself become encrypted by routine EN2.

After execution of routine EN2, the contents of the memory 50 have been further encrypted and are illustrated at 50C in Fig. 4. Schematically, wavy lines are used to illustrate that the degree of encryption has now increased, so that, for example, corresponding pairs of characters which are still recognisable at 50B, are no longer recognisable at 50C. The second operation of the routine is then completed by embedding the corresponding decryption routine DE2 into the memory at 50D.

The routine continues to be repeated, five times in this example, until the final encrypted form is produced at 50E. This is the form which is finally downloaded to the user. It is important to note that the decryption routine DE5 corresponding to the final encryption routine EN5 has been embedded at the beginning of the memory 50. This ensures than when the encrypted form of the software is called for execution, execution will begin by execution of routine DE5, for reasons which will become apparent.

Decryption and execution of the protected software can now be described.

### Decryption and Execution

Decryption and execution take place at the user device 12 or client machine 30,30A. Initially, the software, encrypted as has been described, is received over the communication network and placed in memory 12G,30B of the devices 12,30. When the software is run, it is loaded to main memory 12E,30E. A section of main memory, here indicated by the numeral 80, will thus initially be in the same form as the memory 50E prior to downloading the software to the user.

When the protected software begins to run, decryption routine DE5 will first be executed, in view of its position, as has previously been described. Alternative arrangements could be made to ensure that execution begins with routine DE5.

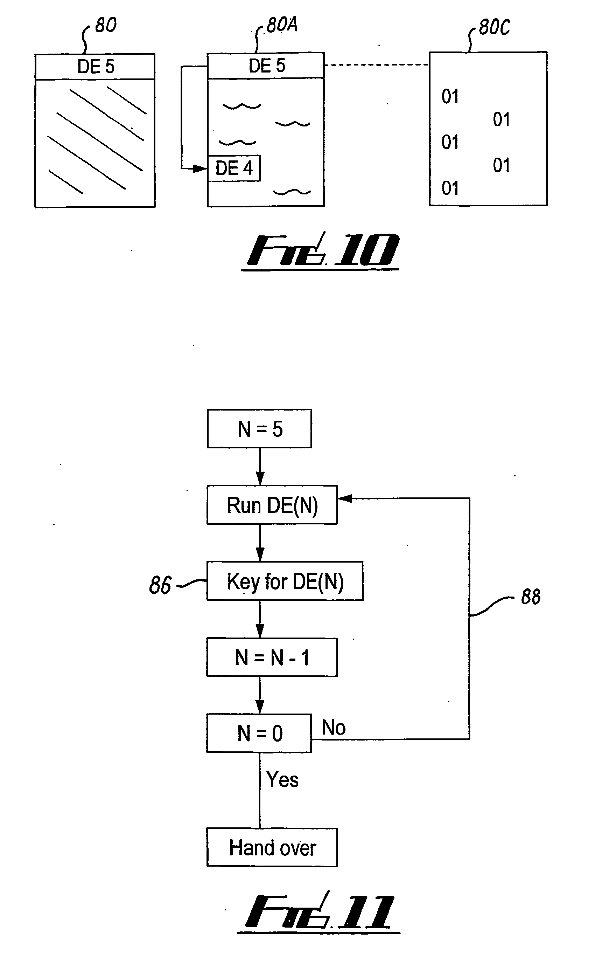

The procedure for decrypting and running the application can be described with reference to Fig. 11. The process begins with a count of N at 5, thus causing routine DE5 to execute. As part of the execution of DE5, a decryption key is sought at 86. Many arrangements can be used for retrieving a decryption key, and the decryption key may be different for each decryption routine. For example, the decryption key could be held internally of the machine 12,30,30A, and be associated with hardware, software or data. Thus, in the case of a mobile communication device, the key could be stored on a SIM card. In any case, the key could be derived from hardware present in the system, such as serial numbers. The decryption key could be stored in memory or derived from the contents of memory, such as a CRC (cyclic redundancy check) value derived from a target area of memory. It is particularly preferred to use CRC decryption arrangements of the type described in our International Patent Application No. WO 02/06925.

Alternatively, the decryption key could be entered by the user in the form of a personal identification number (PIN).

In a further alternative, which is particularly preferred, a decryption key can be recovered by sending a request over the network 10,32,32A to a remote location, such as the content provider 18 or software supplier 34. This allows further security to be introduced by implementing a security, payment or credit check prior to returning the decryption key to the machine 12,30,30A.

In one or more of these various ways, the decryption key can be unique to the particular combination of user, device and content or software provider. Thus, an attempt to circumvent the protection by making an illicit copy of the downloaded encrypted form of the software, onto another machine, would not be successful because the execution of the decryption routines would call for decryption keys which were not available or inappropriate, so that decryption would not be completed correctly, or at all.

After the appropriate key has been retrieved at 86 and decryption implemented, routine DE5 will have decrypted the contents of memory 80 to the condition illustrated at 80A, schematically illustrating that the contents are now more structured than originally (at 80) but still indecipherable.

When execution of routine DE5 finishes, control is handed to routine DE4, the location of which is made known to routine DE5 as part of the process of embedding DE5. Routine DE4 will only have been encrypted once (by routine EN5) and is thus now available in executable form. Routine DE4 can then execute to further decrypt the protected software. This amounts to a return at 88 to the beginning of the loop of Fig. 11, after decrementing N.

After each decryption routine has executed, these being executed in reverse order to the order in which the corresponding encryption routines were executed, the contents of the memory 80 will eventually be returned, at 80C, to reveal the unencrypted form of the software, as originally obtained from memory 50 (Fig. 8).

The memory 80 is preferably RAM into which the software is temporarily loaded for execution, the software being stored in auxiliary storage (such as hard drive, flash RAM or the like) in the encrypted form in which it was downloaded. Consequently, the unencrypted version of the software is only revealed while it is being executed. When execution finishes, the decrypted form will be lost. Decryption will be required on each occasion the software is loaded to RAM from auxiliary storage.

After the protected software has been fully decrypted at 80C, execution can then be handed to that software, which can then run normally. For example, if the software is a video viewer for use in viewing video delivered over a mobile communications network, the viewer can now be used to gain access to the content 20, which is preferably continuously streamed to the user device 12 in a manner which requires decoding by correct execution of the protected software. Alternatively, and primarily in relation to the examples of Figs. 3 and 6, the software is available as an application installed at the client machine 30,30A for the user to operate in the normal manner.

### Alterations and Modifications

It will be apparent to the skilled reader that many variations and modifications can be made to the apparatus and arrangements described above, without departing from the scope of the present invention. In particular, many different hardware and software technologies could be used to implement the invention. In the case of software intended to be run on an IBM personal computer (PC) or similar machine, it is envisaged that the entire software can be encrypted as described above. Software downloaded to mobile communication devices such as that described in relation to Fig. 1 may be written in mobile software technologies such as JAVA, in which case, the language may impose restrictions on encryption. For example, it is envisaged that when encrypting a JAVA application, the encryption routines would be free to encrypt data but not commands, by reason of restrictions built into the JAVA language. Nevertheless, it will be readily apparent that by making use of the invention, this will nevertheless render the software well protected.

### Advantages

The protection afforded to the software by virtue of the invention has a strength which is derived from several contributing factors. First, there is the effect of repeatedly encrypting the same block of computer code by means of different encryption algorithms. This makes any analysis of the encryption more difficult, because each encryption step needs to be analysed in sequence (and in the correct sequence) but each analysis is obscured by the presence of residual indications of other encryption steps, which evidence may itself have been further encrypted by other routines.

Even if this degree of protection could, in principle, be circumvented, the solution achieved would not be generic to all copies of the same software protected by means of the same implementation of the invention. This arises from the step (Fig. 9) of selecting individual encryption routines from a library of available routines. For example, a selection of five routines from a library of one hundred and fifty routines would give a theoretical number of permutations in excess of 70 billion. A truly generic attempt to circumvent the protection would need to be able to recognise and correctly circumvent every one of these possible combinations of encryption routines. It is envisaged that even if this is theoretically possible, the degree of work involved in achieving the result is so much greater than in relation to the production of a generic circumvention of known software protection arrangements, that solving the problem is unlikely to be sufficiently attractive to those who might otherwise seek to circumvent the protection.

Furthermore, even if correct identification of the decryption routines could be achieved, the necessary decryption keys may not be readily available and, in some of the examples, are only available from a source which can make security, payment or other checks, thus providing a further barrier to be circumvented before the protected software can successfully run.

Whilst endeavouring in the foregoing specification to draw attention to those features of the invention believed to be of particular importance it should be understood that the Applicant claims protection in respect of any patentable feature or combination of features hereinbefore referred to and/or shown in the drawings whether or not particular emphasis has been placed thereon.

## Claims

1. A software protection arrangement operable to protect software sent across a communication network from a software supplier to a client machine, the client machine being operable to request software from the software supplier, and the software supplier being operable in response to a request to send the requested software in encrypted form and with associated identification of the required decryption, successful decryption requiring at least one decryption key, **characterised in that** the software supplier is provided with a plurality of encryption routines and is operable to encrypt by selecting at least two of the encryption routines and executing each selected routine in turn, the first selected routine being applied to the software to be protected, to provide an encrypted form, and the or each further selected routine being applied to an encrypted form provided by a previous execution of another routine, each encryption routine having a decryption routine associated therewith, the decryption routine being incorporated into the encrypted form provided by the corresponding encryption routine and prior to further encryption by another encryption routine.

2. An arrangement according to claim 1, wherein the decryption routine is written into one or more areas of the encrypted form at which the encrypted form contains no meaningful content.

3. An arrangement according to claim 1 or 2, wherein the beginning of the decryption routine corresponding with the final encryption routine applied to the software is written to a position chosen to cause the said decryption routine to run when the encrypted software is called for execution within the client machine.

4. An arrangement according to any preceding claim, wherein each decryption routine concludes by calling the decryption routine corresponding with the previous encryption routine, whereby decryption routines are executed in the reverse order of the corresponding encryption routines.

5. An arrangement according to any preceding claim, wherein each decryption routine requires a decryption key available at the time of decryption.

6. An arrangement according to claim 5, wherein the or a decryption key is available locally at the client machine.

7. An arrangement according to claim 6, wherein the decryption key is stored within the machine or derived from information relating to the hardware or software present at the client machine.

8. An arrangement according to claim 5, wherein the or a decryption key is available from a remote location in response to a request made from the client machine over the communications network.

9. An arrangement according to claim 5, wherein the or a decryption key is identification data input by a user at the client machine.

10. An arrangement according to any of claims 5 to 9, wherein the required decryption key is different for each decryption routine.

11. An arrangement according to any preceding claim, wherein the protected software is an application operable, when decrypted and executed, to decode content available over a communications network.

12. An arrangement according to any preceding claim, wherein the software supplier is operable in response to each request to make a new selection of routines and to encrypt by means of that new selection in order to provide an encrypted form of the software for fulfilment of the request.

13. An arrangement according to any of claims 1 to 11, wherein the software supplier is operable to create an encrypted form of the software, and to provide that encrypted form in response to any request.

14. An arrangement according to claim 13, wherein the software supplier is operable to create periodically a fresh encrypted form of the software for use in fulfilling future requests.

15. An arrangement according to any preceding claim, wherein the software supplier comprises a server machine containing software in unencrypted form, and encryption means operable as aforesaid.

16. An arrangement according to any of claims 1 to 14, wherein the encryption means is remote from the server machine and communicates therewith by means of a communication network.

17. An arrangement according to claim 15 or 16, wherein the encryption means provides the encrypted software to the server machine for onward transmission to the client machine.

18. An arrangement according to claim 15 or 16, wherein the encryption means is operable to transmit the encrypted software to the client machine without passing through the server machine.

19. An arrangement according to any of claims 15 to 17, wherein the encryption means is common to a plurality of server machines, and is operable to encrypt content provided from many of those server machines.

20. Computer software which, when installed on a computer system is operable as a software protection arrangement according to any of the preceding claims.

21. A data storage medium containing computer software as defined in claim 20.

22. A method of encrypting software in which at least two encryption routines are selected from a plurality of available encryption routines, and each selected routine is executed in turn, the first selected routine being applied to the software to be protected, to provide an encrypted form, and the or each further selected routine being applied to an encrypted form provided by a previous execution of another routine, wherein each encryption routine has a decryption routine associated therewith, the decryption routine being incorporated into the encrypted form provided by the corresponding encryption routine and prior to further encryption by another encryption routine.

23. A method according to claim 22, wherein the decryption routine is written into one or more areas of the encrypted form at which the encrypted form contains no meaningful content.

24. A method according to claim 22 or 23, wherein the beginning of the decryption routine corresponding with the final encryption routine applied to the software is written to a position chosen to cause the said decryption routine to run when the encrypted software is called for execution.

25. A method according to claim 22, 23 or 24, wherein each decryption routine concludes by calling the decryption routine corresponding with the previous encryption routine, whereby decryption routines are executable in the reverse order of the corresponding encryption routines.

26. A method according to any of claims 22 to 25 wherein each decryption routine requires a decryption key available at the time of decryption.

27. A method according to claim 26, wherein the required decryption key is different for each decryption routine.

28. A method according to any of claims 22 to 27 wherein the protected software is an application operable, when decrypted and executed, to decode content available over a communications network.

29. A method according to any of claims 22 to 28, wherein a new selection of routines is made on each occasion that software is to be encrypted.

30. A method of providing digital content over a communication network to a customer, in which the digital content is provided in a form which requires receiver software to be executed by the customer to allow the digital content to be used by the customer, and in which the receiver software is provided to the user in return for a payment, the receiver software being encrypted in accordance with the method defined in any one of claims 22 to 29, prior to being provided to the customer, whereby the digital content cannot be used by the customer unless the receiver software has been successfully decrypted.

31. Software encryption apparatus, comprising storage means containing a plurality of encryption routines, selection means operable to select at least two of the encryption routines, and execution means operable to execute each selected routine in turn, the first selected routine being applied to the software to be protected, to provide an encrypted form, and the or each further selected routine being applied to an encrypted form provided by a previous execution of another routine, wherein each encryption routine has a decryption routine associated therewith, the execution means being operable to incorporate the decryption routine into the encrypted form provided by the corresponding encryption routine and prior to further encryption by another encryption routine.

32. Apparatus according to claim 31, wherein the decryption routine is written into one or more areas of the encrypted form at which the encrypted form contains no meaningful content.

33. Apparatus according to claim 31 or 32, wherein the beginning of the decryption routine corresponding with the final encryption routine applied to the software is written to a position chosen to cause the said decryption routine to run when the encrypted software is called for execution.

34. Apparatus according to any of claims 31 to 33, wherein each decryption routine concludes by calling the decryption routine corresponding with the previous encryption routine, whereby decryption routines are executed in the reverse order of the corresponding encryption routines.

35. Apparatus according to any of claims 31 to 33, wherein each decryption routine requires a decryption key available at the time of decryption.

36. Apparatus according to claim 35, wherein the required decryption key is different for each decryption routine.

37. Apparatus according to any of claims 31 to 36 wherein the selection means is operable on each occasion to make a new selection of routines and to encrypt by means of that new selection.

38. Software which, when installed on a computer system, is operable to cause the computer system to function as a software encryption apparatus of the type defined in any of claims 31 to 37.

39. A carrier medium carrying software as defined in claim 38.

40. A carrier medium according to claim 39, wherein the carrier medium is a data storage device.

41. A carrier medium according to claim 39, wherein the carrier medium is a transmission medium, the software being carried by a signal propagating on the medium.

## Patentansprüche

1. Eine Software-Schutzanordnung, die zum Schutz von Software eingesetzt werden kann, wenn sie von einem Software-Lieferanten über ein Datenübertragungsnetz an eine Kundenmaschine gesendet wird, die in der Lage ist, Software vom Software-Lieferanten anzufordern, während der Software-Lieferant in Reaktion auf eine Software-Anforderung imstande ist, die angeforderte Software in verschlüsselter Form und mit der zugehörigen Identifizierung der erforderlichen Dechiffrierung zu senden, wobei für eine erfolgreiche Dechiffrierung mindestens ein Dechiffrierungsschlüssel erforderlich ist, **dadurch gekennzeichnet, dass** der Software-Lieferant eine Mehrzahl von Verschlüsselungsroutinen empfängt und die Verschlüsselung durch Auswahl von mindestens zwei der Verschlüsselungsroutinen vornehmen kann und jede ausgewählte Routine der Reihe nach ausführt, und zwar wird die erste ausgewählte Routine an der zu schützenden Software angewendet, um eine verschlüsselte Form zu erzeugen, woraufhin die oder jede weitere ausgewählte Routine an einer verschlüsselten Form ausgeführt wird, die durch eine vorherige Ausführung einer anderen Routine erzielt wurde, wobei jede Verschlüsselungsroutine eine zu ihr gehörige Verschlüsselungsroutine hat und diese Verschlüsselungsroutine der in die durch die entsprechende Verschlüsselungsroutine erzeugten Verschlüsselungsform integriert wird, ehe eine weitere Verschlüsselung durch eine andere Verschlüsselungsroutine erfolgt.

2. Eine Anordnung gemäß Anspruch 1, bei welcher die Dechiffrierungsroutine in einen oder mehrere Bereiche der verschlüsselten Form eingeschrieben wird, in welchem bzw. welchen die verschlüsselte Form keinen bedeutenden Inhalt enthält.

3. Eine Anordnung gemäß Anspruch 1 oder 2, bei welcher der Anfang der Dechiffrierungsroutine der der letzten an der Software angewendeten Verschlüsselungsroutine entspricht, an einer Position eingeschrieben wird, die ausgewählt wird, um die Durchführung der genannten Dechiffrierungsroutine zu veranlassen, wenn die Ausführung der verschlüsselten Software auf der Kundenmaschine veranlasst werden soll.

4. Eine Anordnung gemäß irgendeinem vorhergehenden Anspruch, bei welcher jede Dechiffrierungsroutine abgeschlossen wird, indem die der vorherigen Verschlüsselungsroutine entsprechende Dechiffrierungsroutine aufgerufen wird, wobei Dechiffrierungsroutinen in umgekehrter Reihenfolge der entsprechenden Verschlüsselungsroutinen ausgeführt werden.

5. Eine Anordnung gemäß irgendeinem vorhergehenden Anspruch, bei welcher jede Dechiffrierungsroutine am Dechiffrierungszeitpunkt einen Dechiffrierungsschlüssel benötigt.

6. Eine Anordnung gemäß Anspruch 5, bei welcher der oder ein Dechiffrierungsschlüssel lokal auf der Kundenmaschine zur Verfügung steht.

7. Eine Anordnung gemäß Anspruch 6, bei welcher der Dechiffrierungsschlüssel auf der Maschine gespeichert ist oder von Informationen zu Hard- oder Software abgeleitet wird, die auf der Kundenmaschine liegt.

8. Eine Anordnung gemäß Anspruch 5, bei welcher der oder ein Dechiffrierungsschlüssel von einem entfernten Standort bezogen werden kann, wenn er von der Kundenmaschine über das Datenübertragungsnetz angefordert wird.

9. Eine Anordnung gemäß Anspruch 5, bei welcher der oder ein Dechiffrierungsschlüssel den Identifizierungsdaten entspricht, die ein Benutzer auf der Kundenmaschine eingegeben hat.

10. Eine Anordnung gemäß irgendeinem der vorhergehenden Ansprüche 5 bis 9, bei welcher für jede Dechiffrierungsroutine ein anderer Dechiffrierungsschlüssel erforderlich ist.

11. Eine Anordnung gemäß einem vorhergehenden Anspruch, bei welcher die geschützte Software einer Anwendung ist, die nach Dechiffrierung und Ausführung Inhalt decodieren kann, der über ein Datenübertragungsnetz zur Verfügung steht.

12. Eine Anordnung gemäß einem vorhergehenden Anspruch, bei welcher der Software-Lieferant in der Lage ist, in Reaktion auf jede Anforderung, eine neue Auswahl von Routinen vorzunehmen und mittels jener neuen Auswahl zu verschlüsseln, um eine verschlüsselte Form der Software zur Erfüllung der Anforderung zu liefern .

13. Eine Anordnung gemäß irgendwelchen der Ansprüche 1 bis 11, bei welcher der Software-Lieferant in der Lage ist, eine verschlüsselte Form der Software zu erzeugen und diese verschlüsselte Form auf jede Anforderung hin zu liefern.

14. Eine Anordnung gemäß Anspruch 13, bei welcher der Software-Lieferant in der Lage ist, zur Erfüllung zukünftiger Anforderungen periodisch eine neue verschlüsselte Form der Software zu erzeugen.

15. Eine Anordnung gemäß einem vorhergehenden Anspruch, bei welcher der Software-Lieferant eine Server-Maschine, auf der sich Software in unverschlüsselter Form befindet, sowie Verschlüsselungsmittel umfasst, die wie oben beschrieben eingesetzt werden können.

16. Eine Anordnung gemäß einem der Ansprüche 1 bis 14, bei welcher sich das Verschlüsselungsmittel entfernt von der Server-Maschine befindet und über ein Datenübertragungsnetz mit dieser Server-Maschine kommunizieren.

17. Eine Anordnung gemäß Anspruch 15 oder 16, bei welcher die Chiffrierungsmittel die verschlüsselte Software an die Server-Maschine zur Weiterleitung and die Kundenmaschine liefern,

18. Eine Anordnung gemäß Anspruch 15 oder 16, bei welcher das Verschlüsselungsmittel eingesetzt werden kann, um die verschlüsselte Software an die Kundenmaschine zu übertragen, ohne über die Server-Maschine geleitet zu werden.

19. Eine Anordnung gemäß irgendwelchen der Ansprüche 15 bis 17, bei welcher eine mehrere Server-Maschinen das Verschlüsselungsmittel gemeinsam tragen und das Verschlüsselungsmittel die Funktion hat, den von vielen dieser Server-Maschinen gelieferten Inhalt zu verschlüsseln.

20. Computer-Software, die irgendeinem der vorstehenden Ansprüche entsprechend nach der Installation auf einem Computer-System als eine Software-Schutzanordnung eingesetzt werden kann.

21. Ein Datenspeichermedium, das der Definition von Anspruch 20 entsprechende Computer-Software enthält.

22. Eine Methode zur Verschlüsselung von Software, bei welcher aus mehreren verfügbaren Verschlüsselungsroutinen mindestens zwei Verschlüsselungsroutinen ausgewählt werden und jede ausgewählte Routine der Reihe nach ausgeführt wird, wobei die erste ausgewählte Routine auf die zu schützende Software angewendet wird, um eine verschlüsselte Form zu erzeugen, und diese oder jede weitere ausgewählte Routine auf einer verschlüsselten Form angewendet wird, die durch die vorhergehende Ausführung einer anderen Routine erzeugt wurde, bei welcher jede Verschlüsselungsroutine mit einer zugehörigen Entschlüsselungsroutine verbunden ist und die Entschlüsselungsroutine vor jeder weiteren Verschlüsselung durch eine andere Verschlüsselungsroutine der von der entsprechenden Verschlüsselungsroutine in die erzeugte verschlüsselte Form integriert wird.

23. Eine Methode gemäß Anspruch 22, bei welcher die Dechiffrierungsroutine in einen Bereich oder mehrere Bereiche der verschlüsselten Form eingeschrieben wird, in welchem bzw. welchen die verschlüsselte Form keinen bedeutungsvollen Inhalt aufweist.

24. Eine Methode gemäß Anspruch 22 oder 23, bei welcher der Anfang der Dechiffrierungsroutine, der der endgültigen auf der Software angewendeten Verschlüsselungsroutine entspricht, auf eine so gewählte Position geschrieben wird, dass die Ausführung der genannten Dechiffrierungsroutine ausgelöst wird, wenn die Ausführung der verschlüsselten Software gefordert wird.

25. Eine Methode gemäß Anspruch 22, 23 oder 24, bei welcher jede Dechiffrierungsroutine **dadurch** abgeschlossen wird, dass die der vorherigen Verschlüsselungsroutine entsprechende Dechiffrierungsroutine aufgerufen wird, wobei Dechiffrierungsroutinen in umgekehrter Reihenfolge der entsprechenden Verschlüsselungsroutinen ausführbar sind.

26. Eine Methode gemäß irgendwelchen der Ansprüche 22 bis 25, bei welcher jede Dechiffrierungsroutine voraussetzt, dass zurzeit der Dechiffrierung ein Dechiffrierungsschlüssel zur Verfügung steht.

27. Eine Methode gemäß Anspruch 26, bei welcher für jede Dechiffrierungsroutine ein anderer Dechiffrierungsschlüssel erforderlich ist.

28. Eine Methode gemäß einem der Ansprüche 22 bis 27, bei welcher die geschützte Software eine Anwendung ist, die nach Dechiffrierung und Ausführung zur Decodierung eines über ein Datenübertragungsnetz verfügbaren Inhalts eingesetzt werden kann.

29. Eine Methode gemäß einem der Ansprüche 22 bis 28, bei der jedes Mal, wenn Software verschlüsselt werden soll, eine neue Auswahl von Routinen vorgenommen wird.

30. Eine Methode, um einem Kunden digitalen Inhalt über ein Datenübertragungsnetz zu bieten, bei welcher der digitale Inhalt in einer Form geboten wird, die die Ausführung von Empfänger-Software durch den Kunden voraussetzt, damit der Kunde den digitalen Inhalt benutzen kann, und bei welcher die Empfänger-Software dem Kunden gegen eine Zahlung zur Verfügung gestellt wird, wobei die Empfängersoftware vor der Bereitstellung an den Kunden entsprechend der in einem der Ansprüche 22 bis 29 definierten Methode verschlüsselt wird, so dass der Kunde den digitalen Inhalt erst nach erfolgreicher Dechiffrierung der Empfänger-Software benutzen kann.

31. Software-Verschlüsselungsvorrichtung, die Mittel zur Speicherung einer Mehrzahl von Verschlüsselungsroutinen, zur Auswahl von mindestens zwei der Verschlüsselungsroutinen einsatzfähige Speicherungsmittel sowie Ausführungsmittel umfasst, die eingesetzt werden können, um jede ausgewählte Routine der Reihe nach auszuführen, wobei die erste ausgewählte Routine auf die zu schützende Software angewendet wird, um eine verschlüsselte Form zu erzeugen, und diese oder jede weitere ausgewählte Routine auf eine verschlüsselte Form angewendet wird, die durch eine vorherige Ausführung einer anderen Routine erzielt wurde, bei welcher jede Verschlüsselungsroutine mit einer zugehörigen Dechiffrierungsroutine verbunden ist, wobei das Ausführungsmittel in der Lage ist, die Dechiffrierungsroutine vor einer weiteren Verschlüsselung in die verschlüsselte Form zu integrieren, die durch die entsprechende Verschlüsselungsroutine hergestellt wurde,

32. Vorrichtung gemäß Anspruch 31, bei welcher die Dechiffrierungsroutine in einen Bereich oder mehrere Bereiche der verschlüsselten Form eingeschrieben wird, in welchem bzw. welchen die verschlüsselte Form keinen bedeutenden Inhalt enthält.

33. Vorrichtung gemäß Anspruch 31 oder 32, bei welcher der Anfang der Dechiffrierungsroutine, der der letzten an der Software vorgenommenen Verschlüsselungsroutine entspricht, an einer Position eingeschrieben wird, die ausgewählt wird, um die Ausführung der genannten Dechiffrierungsroutine zu veranlassen, wenn die Ausführung der verschlüsselten Software aufgefordert wird.

34. Vorrichtung gemäß einem der Ansprüche 31 bis 33, bei welcher jede Dechiffrierungsroutine abgeschlossen wird, indem die der vorherigen Verschlüsselungsroutine entsprechende Dechiffrierungsroutine aufgerufen wird, wobei Dechiffrierungsroutinen in umgekehrter Reihenfolge der entsprechenden Verschlüsselungsroutinen ausgeführt werden.

35. Vorrichtung gemäß einem der Ansprüche 31 bis 33, bei welcher jede Dechiffrierungsroutine voraussetzt, dass Zur Zeit der Dechiffrierung ein Dechiffrierungsschlüssel zur Verfügung steht.

36. Vorrichtung gemäß Anspruch 35, bei welcher für jede Dechiffrierungsroutine ein anderer Dechiffrierungsschlüssel erforderlich ist.

37. Vorrichtung gemäß einem der Ansprüche 31 bis 36, bei welcher das Auswahlmittel jedes Mal eingesetzt wird, wenn eine neue Auswahl von Routinen und eine Verschlüsselung mittels jener neuen Auswahl vorzunehmen ist.

38. Software, die nach Installation auf einem Computer-System in der Lage ist, das Computersystem zu veranlassen, als eine Software-Verschlüsselungsvorrichtung der Art zu fungieren, wie es in einem der Ansprüche 31 bis 37 definiert ist.

39. Ein Trägermedium zum Betreiben von Software gemäß der Definition in Anspruch 38.

40. Ein Trägermedium gemäß Anspruch 39, bei welchem das Trägermedium eine Datenspeichervorrichtung ist.

41. Ein Trägermedium gemäß Anspruch 39, bei welchem das Trägermedium ein Übertragungsmedium ist und die Software durch ein Signal übertragen wird, das auf dem Medium verbreitet wird.

## Revendications

1. Agencement de protection logicielle exploitable pour protéger un logiciel envoyé sur un réseau de communication par un fournisseur de logiciels à un ordinateur client, l'ordinateur client étant exploitable pour demander un logiciel au fournisseur de logiciels, et le fournisseur de logiciels étant exploitable en réponse à une requête d'envoi pour envoyer le logiciel demandé sous forme cryptée et avec une identification associée du décryptage requis, le décryptage réussi exigeant au moins une clé de décryptage, **caractérisé en ce que** le fournisseur de logiciel est muni d'une pluralité de programmes de cryptage et est exploitable pour effectuer un cryptage en sélectionnant au moins deux des programmes de cryptage et en exécutant chaque programme de cryptage l'un après l'autre, le premier programme sélectionné étant appliqué au logiciel à protéger, afin de produire une forme cryptée, et l'autre ou chaque autre programme sélectionné étant appliqué à une forme cryptée produite par une exécution antérieure d'un autre programme, chaque programme de cryptage ayant un programme de décryptage associé, le programme de décryptage étant incorporé dans la forme cryptée produite par le programme de cryptage correspondant et avant un cryptage supplémentaire par un autre programme de cryptage.

2. Agencement selon la revendication 1, dans lequel le programme de décryptage est écrit dans une ou plusieurs zones de la forme cryptée au niveau desquelles la forme cryptée ne contient aucun contenu significatif.

3. Agencement selon la revendication 1 ou 2, dans lequel le début du programme de décryptage correspondant au programme de cryptage final appliqué au logiciel est écrit à une position choisie pour faire en sorte que ledit programme de décryptage soit exécuté quand l'exécution du logiciel crypté dans l'ordinateur client est demandée.

4. Agencement selon l'une quelconque des revendications précédentes, dans lequel chaque programme de décryptage se termine en appelant le programme de décryptage correspondant au programme de cryptage antérieur, si bien que les programmes de décryptage sont exécutés dans l'ordre inverse des programmes de cryptage correspondants.

5. Agencement selon l'une quelconque des revendications précédentes, dans lequel chaque programme de décryptage exige une clé de décryptage disponible au moment du décryptage.

6. Agencement selon la revendication 5, dans lequel la ou une clé de décryptage est disponible localement au niveau de l'ordinateur client.

7. Agencement selon la revendication 6, dans lequel la clé de décryptage est mémorisée dans l'ordinateur ou dérivée d'informations relatives au matériel ou au logiciel présent au niveau de l'ordinateur client.

8. Agencement selon la revendication 5, dans lequel la ou une clé de décryptage est disponible depuis un site distant en réponse à une requête effectuée par l'ordinateur client sur le réseau de communications.

9. Agencement selon la revendication 5, dans lequel la ou une clé de décryptage consiste en données d'identification entrées par un utilisateur au niveau de l'ordinateur client.

10. Agencement selon l'une quelconque des revendications 5 à 9, dans lequel la clé de décryptage requise est différente pour chaque programme de décryptage.

11. Agencement selon l'une quelconque des revendications précédentes, dans lequel le logiciel protégé est une application exploitable, quand elle est décryptée et exécutée, pour décoder un contenu disponible sur un réseau de communications.

12. Agencement selon l'une quelconque des revendications précédentes, dans lequel le fournisseur de logiciel est exploitable en réponse à chaque requête pour effectuer une nouvelle sélection de programmes et un cryptage au moyen de cette nouvelle sélection afin de produire une forme cryptée du logiciel pour satisfaire la requête.

13. Agencement selon l'une quelconque des revendications 1 à 11, dans lequel le fournisseur de logiciel est exploitable pour créer une forme cryptée du logiciel et produire cette forme cryptée en réponse à toute requête.

14. Agencement selon la revendication 13, dans lequel le fournisseur de logiciel est exploitable pour créer périodiquement une nouvelle forme cryptée du logiciel destinée à être utilisée pour satisfaire des requêtes futures.

15. Agencement selon l'une quelconque des revendications précédentes, dans lequel le fournisseur de logiciel comprend un ordinateur serveur contenant un logiciel sous forme non cryptée, et un moyen de cryptage exploitable comme on l'a indiqué précédemment.

16. Agencement selon l'une quelconque des revendications 1 à 14, dans lequel le moyen de cryptage est distant de l'ordinateur serveur et communique avec celui-ci au moyen d'un réseau de communication.

17. Agencement selon la revendication 15 ou 16, dans lequel le moyen de cryptage fournit le logiciel crypté à l'ordinateur serveur en vue de sa transmission consécutive à l'ordinateur client.

18. Agencement selon la revendication 15 ou 16, dans lequel le moyen de cryptage est exploitable pour transmettre le logiciel crypté à l'ordinateur client sans passer par l'ordinateur serveur.

19. Agencement selon l'une quelconque des revendications 15 à 17, dans lequel le moyen de cryptage est commun à une pluralité d'ordinateurs serveurs, et est exploitable pour crypter un contenu fourni depuis un grand nombre de ces ordinateurs serveurs.

20. Logiciel informatique qui, lorsqu'il est installé sur un système informatique, est exploitable comme agencement de protection logicielle selon l'une quelconque des revendications précédentes.

21. Support de mémorisation de données contenant un logiciel informatique tel que défini à la revendication 20.

22. Procédé de cryptage de logiciel dans lequel au moins deux programmes de cryptage sont sélectionnés parmi une pluralité de programmes de cryptage disponibles, et chaque programme sélectionné est exécutable l'un après l'autre, le premier programme sélectionné étant appliqué au logiciel à protéger, afin de produire une forme cryptée, et l'autre ou chaque autre programme sélectionné étant appliqué à une forme cryptée produite par une exécution antérieure d'un autre programme, dans lequel chaque programme de cryptage a un programme de décryptage associé, le programme de décryptage étant incorporé dans la forme cryptée produite par le programme de cryptage correspondant et avant un cryptage supplémentaire par un autre programme de cryptage.

23. Procédé selon la revendication 22, dans lequel le programme de décryptage est écrit dans une ou plusieurs zones de la forme cryptée au niveau desquelles la forme cryptée ne contient aucun contenu significatif.

24. Procédé selon la revendication 22 ou 23, dans lequel le début du programme décrypté correspondant au programme de cryptage final appliqué au logiciel est écrit à une position choisie pour faire en sorte que ledit programme de décryptage soit exécuté quand l'exécution du logiciel crypté dans l'ordinateur client est demandée.

25. Procédé selon la revendication 22, 23 ou 24, dans lequel chaque programme de décryptage se termine en appelant le programme de décryptage correspondant au programme de cryptage antérieur, si bien que les programmes de décryptage sont exécutables dans l'ordre inverse des programmes de cryptage correspondants.

26. Procédé selon l'une quelconque des revendications 22 à 25, dans lequel chaque programme de décryptage exige une clé de décryptage disponible au moment du décryptage.

27. Procédé selon la revendication 26, dans lequel la clé de décryptage requise est différente pour chaque programme de décryptage.

28. Procédé selon l'une quelconque des revendications 22 à 27, dans lequel le logiciel protégé est une application exploitable, quand elle est décryptée et exécutée, pour décoder un contenu disponible sur un réseau de communications.

29. Procédé selon l'une quelconque des revendications 22 à 28, dans lequel une nouvelle sélection de programmes est effectuée chaque fois qu'un logiciel doit être crypté.

30. Procédé de fourniture à un client d'un contenu numérique sur un réseau de communication, dans lequel le contenu numérique est fourni dans une forme qui exige l'exécution par le client d'un logiciel reçu afin de permettre au client d'utiliser le logiciel reçu, et dans lequel le logiciel reçu est fourni à l'utilisateur moyennant un paiement, le logiciel reçu étant crypté conformément au procédé défini dans l'une quelconque des revendications 22 à 29, avant d'être fourni au client, si bien que le contenu numérique ne peut pas être utilisé par le client si le logiciel reçu n'est pas décrypté correctement.

31. Appareil de cryptage logiciel comprenant un moyen de mémorisation contenant une pluralité de programmes de cryptage, un moyen de sélection exploitable pour sélectionner au moins deux des programmes de cryptage, et un moyen d'exécution exploitable pour exécuter chaque programme sélectionné l'un après l'autre, le premier programme sélectionné étant appliqué au logiciel à protéger, afin de produire une forme cryptée, et l'autre ou chaque autre programme sélectionné étant appliqué à une forme cryptée produite par une exécution antérieure d'un autre programme, dans lequel chaque programme de cryptage a un programme de décryptage associé, le moyen d'exécution étant exploitable pour incorporer le programme de décryptage dans la forme cryptée produite par le programme de cryptage correspondant et avant un cryptage supplémentaire par un autre programme de cryptage.

32. Appareil selon la revendication 31, dans lequel le programme de décryptage est écrit dans une ou plusieurs zones de la forme cryptée au niveau desquelles la forme cryptée ne contient aucun contenu significatif.

33. Appareil selon la revendication 31 ou 32, dans lequel le début du programme décrypté correspondant au programme de cryptage final appliqué au logiciel est écrit à une position choisie pour faire en sorte que ledit programme de décryptage soit exécuté quand l'exécution du logiciel crypté dans l'ordinateur client est demandée.

34. Appareil selon l'une quelconque des revendications 31 à 33, dans lequel chaque programme de décryptage se termine en appelant le programme de décryptage correspondant au programme de cryptage antérieur, si bien que les programmes de décryptage sont exécutés dans l'ordre inverse des programmes de cryptage correspondants.

35. Appareil selon l'une quelconque des revendications 31 à 33, dans lequel chaque programme de décryptage exige une clé de décryptage disponible au moment du décryptage.

36. Appareil selon la revendication 35, dans lequel la clé de décryptage est différente pour chaque programme de décryptage.

37. Appareil selon l'une quelconque des revendications 31 à 36, dans lequel le moyen de sélection est exploitable à chaque occasion pour effectuer une nouvelle sélection de programmes et pour effectuer un cryptage au moyen de cette nouvelle sélection.

38. Logiciel qui, lorsqu'il est installé sur un système informatique, est exploitable pour faire en sorte que le système informatique fonctionne comme un appareil de cryptage logiciel du type défini dans l'une quelconque des revendications 31 à 37.

39. Support porteur portant le logiciel défini à la revendication 38.

40. Support porteur selon la revendication 39, dans lequel le support porteur est un dispositif de mémorisation de données.

41. Support porteur selon la revendication 39, dans lequel le support porteur est un support de transmission, le logiciel étant acheminé par un signal se propageant sur le support.
